# EUROPEAN PATENT SPECIFICATION

(11) **EP 2 884 122 B1**
(45) Date of publication and mention of the grant of the patent: **22.03.2017**
(21) Application number: 13197571.6
(22) Date of filing: 16.12.2013
(51) Int. Cl.: F16C 17/04, F16C 17/06, F16C 17/10, F16C 33/10, F16H 57/02

(54) **Thrust bearing, drive train, gear and wind generator**
Drucklager, Antriebsstrang, Getriebe und Windgenerator
Palier de butée, ensemble de transmission, engrenage et générateur éolien

(43) Date of publication of application: 17.06.2015
(73) Proprietor: Areva Wind GmbH, 27572 Bremerhaven (DE)
(72) Inventor: Pischel, Klaus, 27619 Schiffdorf-Spaden (DE)
(74) Representative: Prinz & Partner mbB

(56) References cited:
- WO-A1-2013/153753
- JP-A- H09 166 145
- JP-A- 2003 314 537
- US-A- 5 751 085
- US-A1- 2004 195 275
- US-A1- 2008 217 803

## Description

### FIELD OF THE INVENTION

The invention relates to a thrust bearing comprising a bearing shell and a flanged wheel being coupled to a shaft. The invention also relates to a drive train and to a gear or planetary gear comprising a thrust bearing. Furthermore, the invention relates to a wind generator comprising a gear or planetary gear having a thrust bearing.

### BACKGROUND

Thrust bearings are used in all technical fields, in which an axial motion of a rotating part, for example of a shaft, should be constrained. The following documents describe exemplary thrust bearings.

JP 2003 314537 A discloses a motor bearing unit and a motor with the same. The motor bearing unit is provided with a supporting portion of a shaft and a step portion integrally mounted on the supporting portion. A radial fluid dynamic bearing is rotably supporting the supporting portion of the shaft to a radial direction. A thrust fluid dynamic bearing is rotably supporting the step portion of the shaft to a thrust direction.

JP H09 166145 A teaches a dynamic pressure bearing device to prevent leakage of a lubricant. The bearing device comprises a hole surface of a bearing, a rotary shaft having a outer peripheral surface, and a thrust disc arranged at a rear end of the rotary shaft. Groove patterns for generating a dynamic pressure are formed on the hole surface and the outer peripheral surface of the rotary shaft. Further groove patterns for generating a dynamic pressure are formed on a front and a rear surface of the thrust disc.

WO 2013/153753 A1 discloses an aerostatic bearing having a bearing base that includes an annular projecting portion and a bearing body that includes an annular recess accommodating the annular projecting portion of the bearing base.

A thrust bearing assembly is described in US 2004/0195275 A1 that includes a self-aligning thrust bearing in fluid thrust assemblies where the thrust may become unevenly distributed.

US 5,751,085 A discloses a axial gap type electric motor with dynamic pressure air bearing.

Typically, the thrust bearing comprises a static shell element, also referred to as a bearing shell, and a disk, which is typically referred to as a flanged wheel. This may be coupled to a rotating shaft and cooperates with the bearing shell. Thrust bearings are often realized as frictional or sliding bearings. The bearing loads are transmitted between the bearing shell and the flanged wheel. In a bearing gap between theses two parts, there is a lubricant, which is applied to lubricate the mating sliding surfaces of the bearing shell and the flanged wheel. For supplying the sliding surfaces with lubricant, it is known to provide the bearing shell with lubricant grooves.

A suitable combination of materials is selected for the bearing shell and the flanged wheel, wherein one material has a higher hardness than the other. The harder material is typically applied for the flanged wheel. The bearing shell, which is made from the softer material, is typically subject to material wear.

For permanent and service reduced use of a machine comprising such a thrust bearing, it is necessary that the lubrication of the bearing is maintained even during long term operation. Traditionally, this technical problem is dealt with providing the bearing shell with excess material, which can be abraded over the lifetime of the bearing. This approach, however, requires a high material strength for the bearing shell and may result in an increasing bearing clearance over the lifetime. This may be undesirable since the bearing shell runs the risk of uneven abrasion and potential loss of the lubricating grooves, which may cause insufficient lubrication of the bearing.

### SUMMARY

It is an object of the invention to provide an improved thrust bearing comprising a bearing shell and a flanged wheel, an improved drive train and an improved gear or planetary gear having such a thrust bearing. Furthermore, it is an object of the invention to provide an improved wind generator comprising a gear or planetary gear with a thrust bearing.

The object of the invention is solved by the subject matter of claims 1, 10, 12, 13 and 14.

In one aspect of the invention, there is a thrust bearing comprising a bearing shell and a flanged wheel being coupled to a shaft. The flanged wheel comprises an axial sliding surface, which is provided with a plurality of radial lubricating grooves. Hence, the radial lubricating grooves are incorporated in the rotating part of the thrust bearing. The lubricating grooves may supply lubricant to the sliding surfaces of the flanged wheel and to the bearing shell to obtain a sufficient and reliable lubrication, which minimizes the wear of the bearing.

The lubricating grooves are closed on a radial outer end. These halve closed lubricating grooves ensure that the lubricant is maintained within the bearing gap of the thrust bearing even though the flanged wheel rotates. Due to the rotation of the flanged wheel, centrifugal forces affect the lubricant to flow along the lubricating grooves towards their radial outer end. As these radial outer ends of the lubricating grooves are closed, a loss or drain of lubricant from the bearing gap of the thrust bearing is reduced.

The lubricant used can be grease or lubricating oil.

Furthermore, the lubricating grooves are V-shaped while they widen radial inwardly. In other words, the lubricating grooves may have a smaller width near to their radial outer end, when compared to their radial inwards access opening. The lubricating grooves open radial inwards. In other words, they may have a greater width near to the shaft, when compared to their radial outer end, which is arranged at a greater distance from the shaft. This design of the lubricating grooves is suitable to obtain a force component, which is orientated radial inwardly. This force component effects a longer dwell time of the lubricant inside the bearing gap of the thrust bearing. In particular, this results in a longer dwell time of the lubricant between the sliding surfaces of the bearing shell and the flanged wheel. The fluidic force component, which results from the shape of the lubricating grooves, acts substantially contrary to the centrifugal force, which impacts on the lubricant when the flanged wheel rotates.

In another aspect of the invention, the lubricating grooves may be coupled to each other via a substantially circumferential groove. In other words, this groove provides a fluidic connection between the lubricating grooves along a substantially circumferential direction of the flanged wheel. The lubricant is allowed to uniformly distribute among the lubricating grooves. This uniform supply with lubricant further
reduces the wear of the bearing shell and the flanged wheel. It may ensure a closed lubricating film over the entire sliding surfaces.

The circumferential groove may be arranged to have a radial distance from the closed end of the lubricating grooves. In particular, the circumferential groove may have a smaller radial distance to the shaft when compared to the closed ends of the lubricating grooves. Advantageously, the lubricant is allowed to flow from the circumferential groove into the lubricating grooves due to the impact of the centrifugal forces occurring when the shaft rotates and typically due to the impact of the pressurized oil supply.

The radial lubricating grooves may have a depth of approximately two millimeter. The circumferential groove may have a depth of approximately a millimeter. This advantageously applies to all embodiments of the invention.

In another advantageous aspect of the invention, the sliding surface of the flanged wheel may comprise wedge-shaped sections, which are arranged between the lubricating grooves. In particular, the wedge-shaped sections are arranged on both sides of the lubricating grooves along the circumference of the flanged wheel. The wedge-shaped sections allow the lubricant to build up a locally increased hydrodynamic pressure in the bearing gap. When the rotation of the flanged wheel urges the lubricant to flow along the wedged-shaped section, this may establish a hydrodynamic lubricating film between the sliding surfaces of the flanged wheel and the bearing shell. Consequently, the thrust bearing according to aspects of the invention is configured as a hydrodynamic thrust bearing.

Advantageously, the wedge-shaped sections are arranged between the lubricating grooves since they supply the wedges with lubricant.

Furthermore, the lubricating grooves may be arranged directly adjacent to the wedge-shaped sections so as to enhance the supply with lubricant as well as the buildup of the hydrodynamic lubricating film. A longitudinal edge of the wedge-shaped section may be arranged to be identical or to be in direct contact with a longitudinal edge of the adjacent lubricating groove. Both longitudinal edges may project in a substantially radial direction of the flanged wheel. In particular, since the lubricating grooves are V-shaped, the two edges may be tilted with respect to the exact radial direction.

Advantageously, two wedge-shaped sections of the flanged wheel may be provided between a neighboring pair of lubricating grooves. A slope of these two wedge-shaped sections may be contrary. Consequently, the hydrodynamic lubricating film will develop, irrespectively of the direction of rotation of the flanged wheel.

A respective one of the longitudinal edges of a wedge-shaped section may be aligned parallel to a longitudinal edge of the corresponding lubricating groove. This means that a longitudinal edge of the wedge-shaped section facing away from the lubricating groove is also parallel to the longitudinal edge of the lubricating groove.

This ensures that a distance between the lubricating groove and the longitudinal edge facing away from the lubricating groove is equal over the entire longitudinal length of the wedge shaped section. A uniform hydrodynamic lubricating film may develop along the radial length of the wedge shaped section.

According to another embodiment of the invention, the wedge-shaped section may have an inclination of approximately 1:400. This particular value for the inclination turned out to be advantageous in various practical experiments. It ensures a reliable built-up of the lubricating film within a favored time and at a favored rotational speed.

In another aspect of the invention, the sliding surface of the flanged wheel may comprise rest sections being arranged between the lubricating grooves. In other words, a rest section may be sandwiched by the two wedge-shaped sections on either side, along the circumference of the flanged wheel. Between these sections there are the load carrying and sliding surfaces splitting the hydrodynamic lubricating film when the rotational speed is sufficient. These rest sections are used to take up the axial bearing when the shaft does not rotate, which means when the bearing is stopped. Advantageously, the rest sections may be arranged adjacent to a pair of wedge-shaped sections. The rest sections together with the neighboring wedge-shaped sections may have a substantially trapezoid shape. This may be true, when the three parts are considered in a cross-sectional view, which is substantially parallel to a longitudinal axis of the shaft.

The arrangement of the lubricating grooves, the wedge-shaped sections and the rest sections may be arranged such that between two lubricating grooves, two wedge-shaped sections and one rest section is provided. Again, this is considered along the circumference of the flanged wheel. Two lubricating grooves sandwich the two wedge-shaped sections and the rest section, which is provided between the wedge-shaped sections. Though, a space between the longitudinal edges of the wedge-shaped sections facing away from neighboring lubricating grooves is filled with the rest section. Due to the V-shaped design of the lubricating grooves and the parallel orientation of the adjacent wedge-shaped sections, the rest sections have a trapezoid shape when considered in a front view on the sliding surface of the flanged wheel.

In another aspect of the invention, the flanged wheel may be manufactured from a material having a higher hardness than the material, which is used for manufacturing the bearing shell. This selection of materials for manufacture of the thrust bearing ensures that the wear takes place at the bearing shell. Since the lubricating grooves are provided in that part of the thrust bearing, which is made of the harder material, namely in the flanged wheel, the wedge-shaped sections and the lubricating grooves are not subject to abrasion. The residual risk for a loss of the lubricating film up the wedge-shaped sections is minimized.

The bearing shell may be manufactured from a white metal alloy or bronze, for example. In contrast, the flanged wheel may be manufactured from steel.

The bearing shell may be configured to have a plane sliding surface. In contrast to this, the flanged wheel comprises a sliding surfaces, which may be provided with lubricating groves, wedge-shaped section etc.

Advantageously, the bearing shell may comprise a sealing edge. This may have approximately a same axial dimension as the flanged wheel. The sealing edge slows down the lubricant from getting drained from the bearing gap of the thrust bearing. Therefore, the dwell time of the lubricant in the thrust bearing may be increased.

In turn, this extension of dwell time may lead to longer service intervals and extends the overall life expectancy of the thrust bearing, which saves costs.

According to another aspect of the invention, a drive train and a planetary gear, which comprises a thrust bearing in accordance with aspects and embodiments of the invention, are provided. Furthermore, according to still another aspect of the invention, a wind generator with a planetary gear having a thrust bearing in accordance with the aspects and embodiments of the invention is provided.

Same or similar advantages, which have been mentioned with respect to the thrust bearing, apply to the drive train, the planetary gear and to the wind generator in a same or similar way and are therefore not repeated.

### BRIEF DESCRIPTION OF DRAWINGS

Further aspects and features of the invention will ensue from the following description of preferred embodiments of the invention with reference to the accompanying drawings, wherein
FIG. 1 shows a simplified wind generator according to an embodiment of the invention,
FIG. 2 shows a simplified perspective view of a planetary gear according to an embodiment of the invention,
FIG. 3 shows a simplified detailed cross-sectional view of a thrust bearing according to an embodiment of the invention,
Fig. 4 shows a simplified detailed front view of the sliding surface of the flanged wheel of a thrust bearing according to an embodiment of the invention, and
Fig. 5 shows a detail of Fig. 3.

### DEATAILED DESCRIPTION OF EXAMPLE EMBODIMENTS

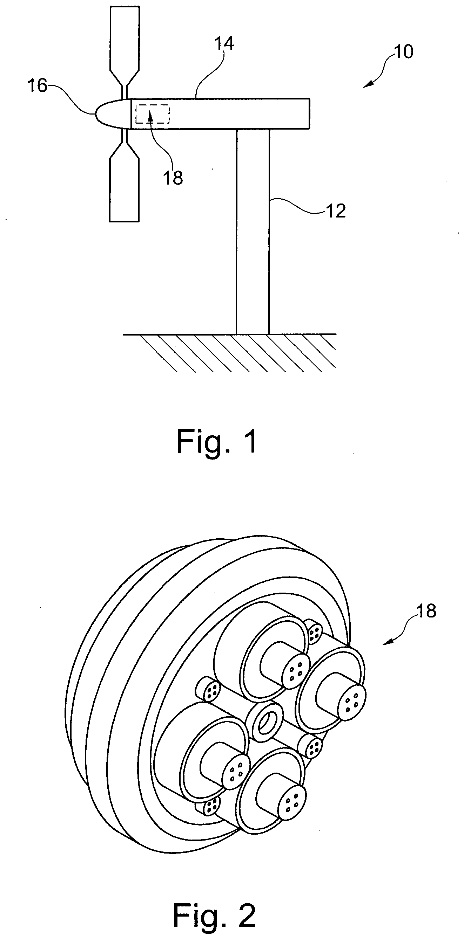

Fig. 1 is a simplified view of a wind generator 10 having a supporting structure 12 carrying a nacelle 14. A rotor hub 16 is coupled to a main shaft, which is further coupled to a planetary gear. A driven shaft of the planetary gear is coupled to a generator for production of electrical energy. The drive train of the wind generator 10, which comprises the rotor hub 16, the main shaft and the planetary gear, is arranged in the nacelle 14.

The planetary gear 18 is shown Fig. 2 in a simplified perspective view. It comprises a thrust bearing, which constrains an axial movement of a rotating shaft thereof. In particular, a shaft of a planet wheel of the planetary gear 18 may be mounted using the thrust bearing which is supported by the planet carrier.

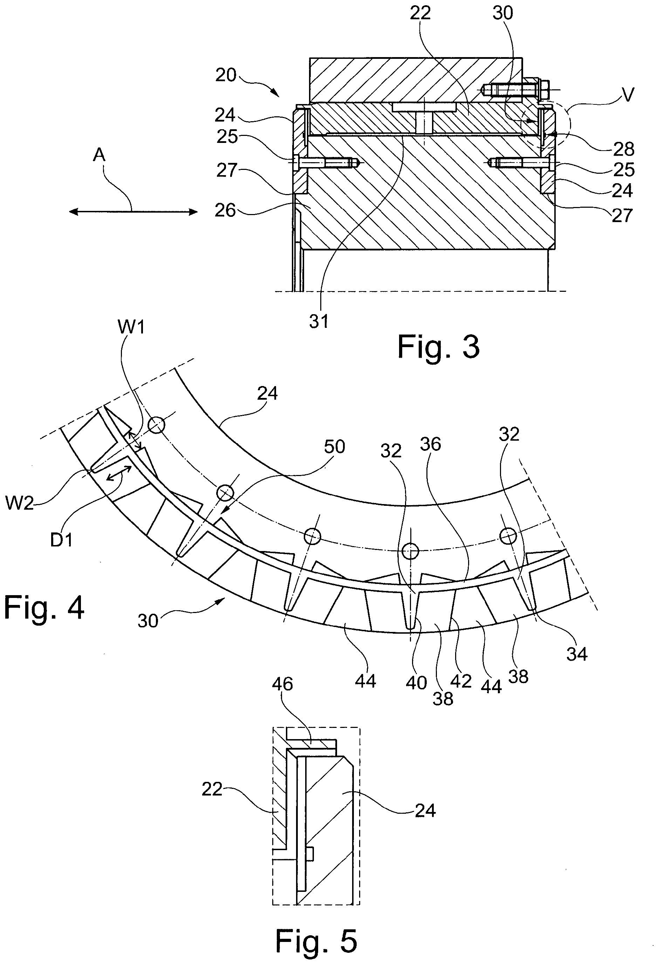

In Fig. 3, there is a detailed view of the thrust bearing 20. The cross-section is arranged along a longitudinal direction A of the shaft 26. The thrust bearing 20 comprises a bearing shell 22 and a pair of flanged wheels 24, which are directly coupled to the shaft 26 using fasteners 25, for example screws.

A pair of recesses 27 is arranged on opposite sides of the shaft 26, when considered in the longitudinal direction A. The recesses 27 project along the circumference of the shaft 26 and are configured to receive a respective one of the flanged wheels 24. A depth or longitudinal dimension of the recesses 27 may correspond with a thickness of the flanged wheels 24.

The thrust bearing 20 allows a rotational movement of the shaft 26 around an axis, which projects in longitudinal direction A. Radial and axial displacement of the shaft 26 is limited by the thrust bearing 20. For mounting of the shaft 26 in accordance with this typical functionality of a thrust bearing, the thrust bearing 20 according to the embodiment comprises a static part, namely the bearing shell 22, and a rotating part, namely the flanged wheels 24, which are coupled to the shaft 26.

Typically, the thrust bearing shell 22 comprises two counteracting sliding surfaces 30 one on each face to provide a biaxial thrust bearing 20. The bearing shell 22 and the flanged wheel 24, have cooperating sliding surfaces. In particular, the flanged wheel 24 comprises a loading surface 30 and the bearing shell 22 comprises a sliding surface 28. These two sliding surfaces mate each other, when the shaft 26 receives an axial load. Consequently and for a mere abbreviation and simplification of the following explanation of details and characteristics of the thrust bearing 20, reference will be made to one exemplary flanged wheel 24.

The flanged wheel 24 extends radial outwards of the shaft 26 and provides the sliding surface 30 on an inwardly oriented surface of a section, which projects over the lateral surface or shell of the shaft 26.

The bearing shell 22 encloses the lateral surface of the shaft 26. A rotational movement of the shaft 26 is possible since there is a radial clearance 31 between the outer cylindrical surface of the shaft 26 and the inner cylindrical surface of the bearing shell 22. An axial length of the bearing shell 22 corresponds with an axial clearance between the two recesses 27. The bearing shell 22 is mounted between the two flanged wheels 24, which biaxially constrain the axial movement of the shaft 26 and receive a corresponding thrust force.

During operation of the thrust bearing 20, the shaft 26 rotates and, therefore, the sliding surface of the flanged wheel 24 and the sliding surfaces of the bearing shell 22 have to be lubricated. There is an oil supplying ring groove and oil transforming connection between the oil supplying outer ring groove and the inner oil distribution pocket.

To supply the sliding surfaces 28, 30 with the lubricant, the sliding surface 30 of the flanged wheel 24 is provided with lubricating grooves 32. Fig. 4 shows a detail of the sliding surface 30 of the flanged wheel 24. The lubricating grooves 32 are provided along a circumference of the flanged wheel 24. They have a closed end 34 on a radial outer side. This means, the closed end 34 has a greater radial distance from the shaft center 26 than an inlet opening 50 of the lubricating grooves 32. Furthermore, the lubricating grooves 32 are V-shaped, which means that they open or widen inwardly. In other words, a first width W1 of the lubricating grooves 32, which is determined near to the inlet opening 50, is greater than a second width W2, which is determined near to the closed end 34.

There is a fluidic connection between the lubricating grooves 32. This is provided by a circumferential groove 36, which connects the lubricating grooves 32 so as to obtain a uniform lubrication over the sliding surface 30. The circumferential groove itself is connected to the oil distribution pocket. The circumferential groove 36 may be arranged to have a radial distance D1 to the closed end 34 of the lubricating grooves 32. The rotation of the flanged wheel 24 causes the lubricant to be subject to centrifugal forces, which push the lubricant radial outwards. Since the circumferential groove 36 has a radial distance D1 from the closed end 34 of the lubricating grooves 32, this will allow the lubricant to enter and fill the lubricating grooves 32.

As the flanged wheel 24 rotates (and due to the pressurized (forced) lubrication), the lubricant, which resides in the lubricating grooves 32 and in the circumferential groove 36, is urged radial outwards by the centrifugal forces. The lubricant flows along the lubricating grooves 32 towards their closed ends 34. However, the V-shape of the lubricating grooves 32 causes a fluidic force component, which is directed inwardly and counteracts the centrifugal force. Therefore, the dwell time of the lubricant within the bearing gap between the sliding surfaces 28, 30 is extended. The dashed circle referenced by V indicates a detail that is shown in FIG. 5.

The flanged wheel 24 according to the embodiment in FIG. 4 further comprises wedged-shaped sections 38, which are arranged between two neighboring lubricating grooves 32. The wedged-shaped sections 38 are for building up a hydrodynamic pressure between the sliding surface 30 of the flanged wheel 24 and the loading surface 28 of the bearing shell 22 during operation of the thrust bearing 20. These wedged-shaped sections 38 may be arranged directly adjacent to the lubricating grooves 32 such that a first longitudinal edge 40 of the wedged-shaped sections 38 is directly adjacent to or identical to a longitudinal edge of the lubricating groove 32.

A slope of wedged-shaped sections 38, which are arranged on opposite longitudinal edges of the lubricating groove 32, may be different. In particular, these wedged-shaped sections 38 may have an opposite slope.

Advantageously, the wedged-shaped sections 38 have an inclination of 1:400 in order to reach the hydrodynamic pressure, which is necessary for operation of the bearing within a favored time and the desired speed of rotation. The inclination of the wedged-shaped sections 38 is established on the sliding surface 30 in circumferential direction of the flanged wheel 24.

Furthermore, a second longitudinal edge 42 of the wedged-shaped sections 38 may be arranged parallel to the first longitudinal edge 40. Due to this, the first longitudinal edge 40 and the second longitudinal edge 42 are equally spaced with respect to the lubricating groove 32 over the entire radial length of the wedged-shaped section 38. Hence, a uniform hydrodynamic pressure is built up.

The sliding surface 30 of the flanged wheel 24 may further comprise two wedged-shaped sections 38, which are sandwiched by two lubricating grooves 32. This pair of wedged-shaped sections 38 may have an opposite slope of their inclination. This will ensure that the sliding surface 30 is sufficiently provided with a lubricating film for rotation of the shaft 26 in both directions, namely in clockwise and in counterclockwise direction.

The longitudinal edges 42 of the two neighboring wedged-shaped sections 38 enclose a rest section 44. This rest section 44 bears the axial load of the shaft 26 when it is not rotated. The rest section 44 may have a trapezoid shape as the adjacent second longitudinal edges 42 of the wedged-shaped sections 38 are parallel to a respective one of the adjacent lubricating grooves 32 being V-shaped.

The rest section 44 can be coated with a material having a reduced static friction with respect to the material used for the bearing shell 22. Consequently, the rest section 44 may be advantageous to overcome a static friction more easily when the shaft 26 starts to rotate.

Fig. 5 shows a detail of Fig. 3. The interacting sliding surfaces 30, 28 are shown as well as a sealing edge 46, which is arranged at the bearing shell 22. The sealing edge 46 has approximately the same axial dimension as the flanged wheel 24. The sealing edge 46 may prevent lubricant from leaving the bearing gap between the sliding surfaces 28, 30 during operation of the thrust bearing 20. This extends the dwell time of the lubricant in the bearing gap.

Thrust bearings 20 are typically manufactured using two different materials with respect to the hardness for enhancing the characteristics of dry friction. The rotating part, in particular the flanged wheel 24, is made of a harder material than the static bearing shell 22, which is typically made of a white metal alloy or bronze.

According to an aspect of the invention, the lubricating grooves 32 and the circumferential groove 36 as well as the wedged-shaped sections 38 are provided on the harder flanged wheel 24 as this extends the service periodicity.

## Claims

1. A thrust bearing (20) comprising a bearing shell (22) and a flanged wheel (24) being configured to be coupled to a shaft (26), wherein the flanged wheel (24) comprises a sliding surface (30) having a plurality of radial lubricating grooves (32), wherein the lubricating grooves (32) are closed on a radial outer end (34), **characterized in that** the lubricating grooves (32) are V-shaped and widen radially inwardly.

2. The thrust bearing (20) according to claim 1, wherein the lubricating grooves (32) are coupled to each other via a substantially circumferential groove (36).

3. The thrust bearing (20) according to anyone of the preceding claims, wherein the sliding surface (30) comprises wedge-shaped sections (38), which are arranged between the lubricating grooves (32).

4. The thrust bearing (20) according to claim 3, wherein the wedge-shaped sections (38) have an inclination of approximately 1:400.

5. The thrust bearing (20) according to anyone of the preceding claims, wherein the sliding surface (30) comprises rest sections (44) being arranged between the lubricating grooves (32).

6. The thrust bearing (20) according to anyone of the preceding claims, wherein the flanged wheel (24) is manufactured from a material having a higher hardness and/or wear resistance than the material, which is used for manufacturing the bearing shell (22).

7. The thrust bearing (20) according to anyone of the preceding claims, wherein the bearing shell (22) comprises a sealing edge (46), which has approximately the same axial dimension as the flanged wheel (24).

8. The thrust bearing (20) according to anyone of the preceding claims, wherein a sliding surface (28) of the bearing shell (22) is a plane surface.

9. The thrust bearing (20) according to anyone of the preceding claims, wherein the thrust bearing (20) is a hydrodynamic bearing.

10. A gear arrangement comprising a thrust bearing (20) according to anyone of the preceding claims.

11. A gear arrangement according to claim 10, **characterized in that** it is a planetary gear (18).

12. A planetary gear (18), wherein a shaft of a planet is mounted using the thrust bearing (20) according to anyone of claims 1-10.

13. A drive train comprising a gear according to claim 10, 11 or 12.

14. A wind generator (10) comprising a gear according to claim 10, 11 or 12.

## Patentansprüche

1. Drucklager (20) mit einer Lagerschale (22) und einer Flanschscheibe (24), die dazu ausgelegt ist, an eine Welle (26) gekoppelt zu sein, wobei die Flanschscheibe (24) eine Gleitfläche (30) mit mehreren radialen Schmiernuten (32) aufweist, wobei die Schmiernuten (32) an einem radialen äußeren Ende (34) geschlossen sind, **dadurch gekennzeichnet, dass** die Schmiernuten (32) V-förmig sind und sich radial einwärts aufweiten.

2. Drucklager (20) nach Anspruch 1, wobei die Schmiernuten (32) über eine im Wesentlichen umlaufende Nut (36) aneinander gekoppelt sind.

3. Drucklager (20) nach einem der vorhergehenden Ansprüche, wobei die Gleitfläche (30) keilförmige Abschnitte (38) aufweist, die zwischen den Schmiernuten (32) angeordnet sind.

4. Drucklager (20) nach Anspruch 3, wobei die keilförmigen Abschnitte (38) eine Neigung von etwa 1 : 400 haben.

5. Drucklager (20) nach einem der vorhergehenden Ansprüche, wobei die Gleitfläche (30) Stützabschnitte (44) aufweist, die zwischen den Schmiernuten (32) angeordnet sind.

6. Drucklager (20) nach einem der vorhergehenden Ansprüche, wobei die Flanschscheibe (24) aus einem Material hergestellt ist, das eine höhere Härte und/oder eine höhere Verschleißbeständigkeit hat als das Material, das zur Herstellung der Lagerschale (22) verwendet wird.

7. Drucklager (20) nach einem der vorhergehenden Ansprüche, wobei die Lagerschale (22) eine Dichtkante (46) aufweist, die etwa die gleiche axiale Abmessung hat wie die Flanschscheibe (24).

8. Drucklager (20) nach einem der vorhergehenden Ansprüche, wobei eine Gleitfläche (28) der Lagerschale (22) eine ebene Fläche ist.

9. Drucklager (20) nach einem der vorhergehenden Ansprüche, wobei es sich bei dem Drucklager (20) um ein hydrodynamisches Lager handelt.

10. Getriebeanordnung mit einem Drucklager (20) nach einem der vorhergehenden Ansprüche.

11. Getriebeanordnung nach Anspruch 10, **dadurch gekennzeichnet, dass** es sich um ein Planetengetriebe (18) handelt.

12. Planetengetriebe (18), wobei eine Welle eines Planetenrads unter Verwendung des Drucklagers (20) nach einem der Ansprüche 1 bis 10 angebracht ist.

13. Antriebsstrang mit einem Getriebe nach Anspruch 10, 11 oder 12.

14. Windkraftanlage (10) mit einem Getriebe nach Anspruch 10, 11 oder 12.

## Revendications

1. Palier de butée (20), comportant un coussinet de palier (22) et une poulie à bord (24) réalisée de manière à être couplée à un arbre (26), la poulie à bord (24) comportant une surface de glissement (30) qui présente une pluralité de rainures de graissage radiales (32), les rainures de graissage (32) étant fermées à une extrémité extérieure radiale (34), **caractérisé en ce que** les rainures de graissage (32) ont une forme de V et s'évasent radialement vers l'intérieur.

2. Palier de butée (20) selon la revendication 1, les rainures de graissage (32) étant reliées les unes aux autres par une rainure (36) sensiblement périphérique.

3. Palier de butée (20) selon l'une des revendications précédentes, la surface de glissement (30) présentant des tronçons (38) en forme de coin qui sont agencés entre les rainures de graissage (32).

4. Palier de butée (20) selon la revendication 3, les tronçons (38) en forme de coin présentant une inclinaison d'environ 1 : 400.

5. Palier de butée (20) selon l'une des revendications précédentes, la surface de glissement (30) présentant de tronçons d'appui (44) qui sont agencés entre les rainures de graissage (32).

6. Palier de butée (20) selon l'une des revendications précédentes, la poulie à bord (24) étant réalisée à partir d'une matière qui présente une dureté et/ou une résistance à l'usure supérieure à celle de la matière utilisée pour la fabrication du coussinet de palier (22).

7. Palier de butée (20) selon l'une des revendications précédentes, le coussinet de butée (22) comportant une arête d'étanchement (46) qui présente environ la même dimension axiale que la poulie à bord (24).

8. Palier de butée (20) selon l'une des revendications précédentes, une surface de glissement (28) du coussinet de palier (22) étant une surface plane.

9. Palier de butée (20) selon l'une des revendications précédentes, le palier de butée (20) étant un palier hydrodynamique.

10. Agencement d'engrenage comportant un palier de butée (20) selon l'une des revendications précédentes.

11. Agencement d'engrenage selon la revendication 10, **caractérisé en ce qu'**il s'agit d'un engrenage planétaire (18).

12. Engrenage planétaire (18), un arbre d'une roue planétaire étant monté en utilisant le palier de butée (20) selon l'une des revendications 1 à 10.

13. Train d'entraînement comportant un engrenage selon les revendications 10, 11 ou 12.

14. Éolienne (10) comportant un engrenage selon les revendications 10, 11 ou 12.
